(19) Europäisches Patentamt
European Patent Office
Office européen des brevets

(11) **EP 2 743 723 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(51) Int Cl.:
**G01S 7/41** *(2006.01)*   **G01S 13/86** *(2006.01)*
**G01S 13/91** *(2006.01)*

(21) Anmeldenummer: **12197148.5**

(22) Anmeldetag: **14.12.2012**

(54) **Verfahren zur Detektion eines Rades eines Fahrzeugs**

Method for detecting a wheel of a vehicle

Procédé destiné à détecter les roues d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.06.2014 Patentblatt 2014/25**

(73) Patentinhaber: **Kapsch TrafficCom AG**
**1120 Wien (AT)**

(72) Erfinder: **Nagy, Oliver**
**1190 Wien (AT)**

(74) Vertreter: **Weiser, Andreas**
**Patentanwalt**
**Kopfgasse 7**
**1130 Wien (AT)**

(56) Entgegenhaltungen:
**EP-A1- 2 390 859    EP-A1- 2 682 778**
**US-A1- 2003 102 997**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Detektion eines sich drehenden Rades eines Fahrzeugs durch Auswerten der Dopplerverschiebung eines Messstrahls, welcher von einer vom Fahrzeug passierten Detektoreinheit ausgestrahlt, vom Rad reflektiert und dopplerverschoben zurückerhalten wird.

Das Detektieren von Fahrzeugrädern ist bei zahlreichen Anwendungen von Interesse. So kann aus dem Erkennen von Rädern mit Sicherheit das Befahren einer bestimmten Verkehrsfläche erkannt werden, beispielsweise zur Grenzüberwachung oder zur Auslösung bestimmter Aktionen, wie das Auslösen eines Alarms, Einschalten einer Beleuchtung, Öffnen eines Schrankens, Aufnehmen eines Fotos zu Überwachungszwecken usw. Auch moderne Verkehrsgebührensysteme stellen häufig zur Gebührenbemessung auf die Achsanzahl von Fahrzeugen ab, sodass das Detektieren von Rädern (Radachsen) auch eine wichtige Grundlage für die Erhebung oder Kontrolle von Straßenmautgebühren sein kann, insbesondere auch mittels mobiler Kontrollfahrzeuge, welche im Vorbeifahren oder im Gegenverkehr die Achszahl von mautpflichtigen Fahrzeugen kontrollieren sollen.

Aus der DE 10 2008 037 233 A1 ist es bekannt, Räder eines sich bewegenden Fahrzeugs aufgrund ihrer gegenüber dem restlichen Fahrzeug unterschiedlichen horizontalen Komponente der Tangentialgeschwindigkeit, die eine entsprechende Doppler-Frequenzverschiebung eines Radar-Messstrahls bewirkt, zu detektieren. Dazu wird ein Radar-Geschwindigkeitsmesser verwendet, welcher mit einer Radar-Strahlungskeule den unteren Bereich passierender Fahrzeuge bestrahlt und aus dem zurückerhaltenen Empfangsfrequenzgemisch ein einziges Geschwindigkeitsmesssignal zeitlich mittelt, das an den Orten der Räder Signalmaxima zeigt, die zur Raddetektion verwendet werden.

In den nicht-vorveröffentlichten Patentanmeldungen EP 2 538 238 A1 EP 2 538 239 A1 und WO 2012 175 470 A1 hat die Anmelderin der vorliegenden Anmeldung neue, besonders störungsunanfällige und sichere Verfahren zur Raddetektion auf Basis von Dopplermessungen vorgestellt. In der nicht-vorveröffentlichten Anmeldung EP 2 682 778 A1 beschreibt die Anmelderin ein Verfahren gemäß dem Oberbegriff des Anspruchs 1, wobei die Relativposition einer Onboard-Unit zum Rad von einer Kontrolleinrichtung gemessen und über Funk in die Onboard-Unit eingespeichert wird.

Die Anmelderin hat erkannt, dass für eine weitere Verbesserung der Detektionssicherheit eine möglichst gute Ausrichtung des Dopplermessstrahls auf vorbeifahrende Fahrzeuge wünschenswert ist. Bei mehrspurigen Straßen oder Straßen mit Gegenverkehr ist der Passageabstand eines Fahrzeugs an der Detektoreinheit häufig stark variierend, sei es durch den Fahrstil oder die Fahrzeugabmessungen bedingt. Dadurch kann sich eine ungenügende Ausleuchtung des zu detektierenden Rades mit dem Messstrahl ergeben, mit der Folge von Detektionsfehlern.

Die Erfindung setzt sich zum Ziel, die geschilderten Probleme zu überwinden und ein weiter verbessertes Verfahren zur Raddetektion auf Basis von Dopplermessungen zu schaffen.

Dieses Ziel wird erfindungsgemäß mit einem Verfahren zur Detektion eines sich drehenden Rades eines Fahrzeugs durch Auswerten der Dopplerverschiebung eines Messstrahls mit den Merkmalen des Anspruchs 1, 5 oder 6 erreicht

Die Erfindung beruht auf einer Heranziehung von sog. Onboard-Units (OBUs), welche in Straßenmaut- und Kommunikationssystemen zur Vermautung von Ortsnutzungen von Fahrzeugen dienen, für die Lösung der genannten Probleme. Onboard-Units dieser Art können Funkkommunikationen kurzer Reichweite (dedicated short range communications, DSRC) mit straßenseitigen Funkbaken (roadside entities, RSEs) bekannter Position auf ihrem Weg eingehen, wodurch sie bei erfolgreicher DSRC-Funkkommunikation jeweils auf den Funkabdeckungsbereich der Funkbake verortet werden können. Beispiele solcher bakengestützer, infrastrukturgebundener Straßenmautsysteme sind Straßenmautsysteme nach den Standards CEN- bzw. UNI-DSRC, ITS-G5, IEEE-WAVE (IEEE 802.11p) und RFID (radio frequency identification). Doch auch Onboard-Units von satellitengestützten, "bakenlosen" Straßenmautsystemen, bei denen sich die Onboard-Units in einem Satellitennavigationssystem (global navigation satellite system, GNSS) autark selbst verorten und ihre Ortsdaten oder daraus erzeugte Mautdaten z.B. über ein Mobilfunknetz an eine Zentrale senden, können zusätzlich mit DSRC-Funkmodulen ausgestattet sein, sei es für Kontrollauslesezwecke oder als sog. "Hybrid-OBUs", die sowohl mit GNSS- als auch DSRC-Straßenmautsystemen zusammenarbeiten können.

Das Verfahren der Erfindung verwendet die Funkkommunikationsfähigkeit der Onboard-Units, um aus einer Funkkommunikation bei der Passage der Doppler-Detektoreinheit die geometrischen Verhältnisse zur Detektoreinheit und daraus den Passageabstand zu ermitteln, was wiederum zur Ausrichtung des Dopplermessstrahls der Detektoreinheit ausgenützt wird. Im Ergebnis kann eine individuelle, adaptive und genaue Ausrichtung des Messstrahls auf die Räder eines passierenden Fahrzeugs erreicht werden, wodurch alle Arten von Doppler-Auswerteverfahren zur Raddetektion selbst bei variierenden Fahrzeugabständen mit hoher Treffsicherheit und Genauigkeit ausgeführt werden können.

Um die aus der Funkkommunikation zwischen Sendeempfänger der Detektoreinheit und Onboard-Unit des Fahrzeugs gemessene Richtung und Entfernung in eine möglichst genaue Beziehung zur Richtung und Entfernung des Messstrahls zwischen der Detektoreinheit und den Rädern des Fahrzeugs zu setzen, ist es wünschenswert, die Relativposition der Onboard-Unit auf dem Fahrzeug gegenüber den Rädern des Fahrzeugs möglichst gut zu kennen. Diese Relativposition kann jedoch abhängig von der Montagesituation der Onboard-Unit auf dem Fahrzeug stark variieren. Gemäß der Erfindung wird die Relativposition - sei es direkt in numerischer Form oder als abstrahierte Klassenangabe - in der Onboard-Unit gespeichert und im Zuge einer Funkkommunikation ausgelesen und kann somit als Referenzwert im Verfahren berücksichtigt werden.

Der Benutzer kann entweder eine für seinen spezifischen Fahrzeugtyp (Fahrzeugklasse) bestimmte Onboard-Unit erwerben, in welcher bereits eine bestimmte Relativposition eingespeichert ist, die gleichzeitig eine Montagevorschrift für die Anbringung der Onboard-Unit im Fahrzeug darstellt, oder der Benutzer bringt zunächst die Onboard-Unit an einer bestimmten Relativposition im Fahrzeug an und speichert anschließend die Relativposition in die Onboard-Unit ein.

Gemäß einer bevorzugten Ausführungsform der Erfindung wird somit die genannte Relativposition durch Benutzereingabe in der Onboard-Unit gespeichert. Dies kann entweder über eine Tastatur der Onboard-Unit erfolgen oder mit Hilfe eines Datenträgers, in dem die Relativposition gespeichert ist und welcher von der Onboard-Unit ausgelesen wird. Der Datenträger kann beliebiger Art sein, z.B. eine Chipkarte, SIM-Karte, Smart Card, Magnetkarte usw., die über elektrische Kontakte oder drahtlos ausgelesen wird, oder ein Aufkleber mit einem ein- oder zweidimensionalen Barcode, welcher von einem optischen Sensor der Onboard-Unit ausgelesen wird. Bevorzugt wird der Datenträger an der Onboard-Unit angebracht, z.B. in Form eines Aufklebers, und über eine Drahtlosverbindung von der Onboard-Unit ausgelesen. Beispielsweise kann der Aufkleber einen RFID- (radio frequency identification) oder NFC- (near field communication) -Chip enthalten, welcher über Funk von der Onboard-Unit ausgelesen wird.

Alternativ kann die genannte Relativposition bei der Fertigung der Onboard-Unit - sei es in der Fabrik oder anlässlich der Auslieferung an einen Benutzer in einer Programmierstation - in die Onboard-Unit eingespeichert werden.

Schließlich ist es auch möglich, dass die genannte Relativposition von einer stationären oder mobilen Kontrolleinrichtung gemessen und über eine Funkkommunikation in der Onboard-Unit gespeichert wird.

In jeder dieser Ausführungsformen kann die Relativposition sowohl in numerischer Form, z.B. als Montage-Querabstand zu den Rädern und/oder Montage-Höhe über den Rädern und/oder Montage-Längsabstand zu den Rädern in der Onboard-Unit gespeichert werden, oder in Form einer Fahrzeugklasse angegeben werden, z.B. "PKW", "LKW", "BUS" usw., für welche übliche Montagepositionen und damit numerische Werte der Relativposition vorbekannt sind.

Eine besonders vorteilhafte Ausführungsform der Erfindung zeichnet sich daher dadurch aus, dass die genannte Relativposition in der Onboard-Unit in Form einer Angabe einer Fahrzeugklasse gespeichert ist, und dass für die genannte Berücksichtigung die Fahrzeugklassenangabe aus der Onboard-Unit ausgelesen wird und mit Hilfe einer Datenbank, die mögliche Fahrzeugklassen und numerische Werte von Relativpositionen einander zuordnet, in eine Relativposition mit numerischen Werten übersetzt wird. Dadurch wird die Eingabe der Relativposition in die Onboard-Unit wesentlich vereinfacht. Beispielsweise erwirbt der Benutzer eine Onboard-Unit für eine bestimmte Fahrzeugklasse, oder er gibt mittels einer Tastatur oder anderen Eingabeeinrichtung die Klasse seines Fahrzeugs in die Onboard-Unit ein.

Bei jenen Ausführungsformen der Erfindung, bei welchen die Relativposition für jedes Fahrzeug gesondert ausgemessen wird, braucht der Benutzer keine bestimmten Montagevorschriften einhalten bzw. keine Eingaben zutreffen. In einer bevorzugten Variante der Erfindung kann dazu die Kontrolleinrichtung, welche die Relativposition misst, beispielsweise eine der geographisch verteilten straßenseitigen Funkbaken (RSEs) eines bakengestützten Mautsystems sein, und in besonders ausgestatteten Funkbaken desselben kann die genannte Vermessung der Relativposition der Onboard-Unit auf einem Fahrzeug durchgeführt werden. Bei beiden letztgenannten Varianten kann das Messen der Relativposition bevorzugt durch Anfertigen eines Abtastbildes des Fahrzeugs mit einem Scanner der Kontrolleinrichtung, durch Funktriangulation der Onboard-Unit mit einem Sendeempfänger der Kontrolleinrichtung, und durch Referenzieren der Funktriangulation auf das Abtastbild erfolgen. Die Funktriangulation kann dabei insbesondere mittels Phasenmessungen in einem Antennenarray des Sendeempfängers der Kontrolleinrichtung erfolgen.

Alternativ könnte die Relativposition auch auf optischem Wege gemessen werden, z.B. durch Anfertigen eines Frontbilds des Fahrzeugs mit einer Kamera und optisches Erkennen der Position der Onboard-Unit im Frontbild.

Auch das Messen von Richtung und Entfernung zwischen Onboard-Unit und Sendeempfänger kann bevorzugt durch Funktriangulation im Zuge der Funkkommunikation zwischen diesen erfolgen, insbesondere mittels Phasenmessungen in einem Antennenarray des Sendeempfängers der Detektoreinheit.

Das Verfahren der Erfindung eignet sich für jede Art von Messstrahl, der eine Frequenz hat, welche einer dopplereffektbedingten Frequenzverschiebung bei Reflexion an einem sich bewegenden Ziel, wie hier einem sich drehenden Rad, unterliegt. Beispielsweise könnte der Messstrahl ein Laser- oder Ultraschallstrahl sein. Bevorzugt ist der Messstrahl ein Radarstrahl und das Steuern seiner Ausstrahlrichtung erfolgt durch Phasensteuern eines Antennenarrays der Detektoreinheit; alternativ könnte der Messstrahl ein Radarstrahl sein und das Steuern seiner Ausstrahlposition durch Umschalten zwischen mehreren Antennen der Detektoreinheit erfolgen.

Das erfindungsgemäße Verfahren eignet sich auch für ein Zusammenspiel mit jeder denkbaren Variante von Raddetektionsverfahren anhand einer Auswertung der Dopplerverschiebung des Messstrahls im zeitlichen Verlauf. Bevorzugte Varianten der Erfindung zeichnen sich dadurch aus, dass ein Rad detektiert wird, wenn der zeitliche Verlauf der Dopplerverschiebung einen Sprung, einen Anstieg, einen Abfall oder eine Frequenzaufspreizung jeweils über einem Schwellwert zeigt, und auch Kombinationen dieser Varianten sind denkbar.

Das Verfahren der Erfindung eignet sich sowohl für stationäre als auch mobile Detektoreinheiten. Bevorzugt ist die Detektoreinheit in Form eines Kontrollfahrzeugs ausgebildet, sodass mit dem Verfahren der Erfindung beispielsweise Fahrzeuge des Gegenverkehrs oder Fahrzeuge auf Nachbarspuren derselben Fahrtrichtung kontrolliert und hinsichtlich ihrer Räder detektiert werden können.

Das Verfahren der Erfindung ist auch für jede Art von Funkkommunikationen geeignet, welche die genannten Onboard-Units abwickeln können, z.B. auch für Mobilfunkkommunikationen in terrestrischen Mobilfunknetzen. Bevorzugt sind die Funkkommunikationen jedoch Funkkommunikationen im Rahmen bakengestützter Straßenmautsysteme nach den Standards UNI- bzw. CEN-DSRC, ITS-G5, IEEE-WAVE oder RFID.

Die Erfindung wird nachstehend anhand von in den Zeichnungen dargestellten Ausführungsbeispielen näher erläutert. In den Zeichnungen zeigen:

die Fig. 1a - 1d beispielhafte idealisierte Dopplerverschiebungs-Zeitverläufe bei unterschiedlichen Winkelstellungen eines Doppler-Messstrahls relativ zu einem Rad;
die Fig. 2a und 2b zwei Varianten des erfindungsgemäßen Verfahrens anhand beispielhafter Strahlverläufe zwischen einem Kontrollfahrzeug und einem zu kontrollierenden Fahrzeug in Fahrtrichtung gesehen;
Fig. 3 verschiedene Varianten des Verfahrens der Erfindung anhand einer schematischen Draufsicht auf einen Straßenabschnitt mit einer stationären Kontrolleinrichtung, einer als Kontrollfahrzeug ausgebildeten Detektoreinheit und einem zu kontrollierendem Fahrzeug in aufeinanderfolgenden Phasen des Verfahrens; und
die Fig. 4a und 4b die geometrischen Grundlagen des Verfahrens der Erfindung anhand einer Draufsicht (Fig. 4a) und einer Stirnansicht in Fahrtrichtung (Fig. 4b) auf das Kontrollfahrzeug und das zu kontrollierende Fahrzeug im Gegenverkehr.

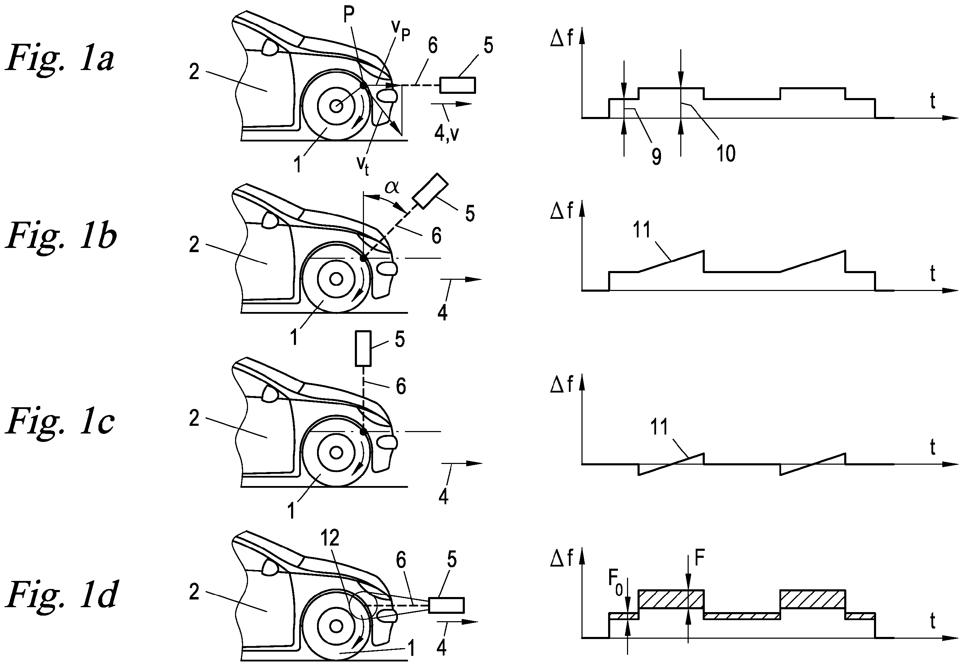

Die Fig. 1 bis 3 zeigen das Prinzip der Detektion eines sich drehenden Rades 1 eines Fahrzeugs 2, das sich auf einer Fahrbahn 3, genauer einer Fahrspur 3' derselben, in einer Fahrtrichtung 4 bewegt. Das Raddetektionsverfahren wird mit Hilfe bzw. in einer Detektoreinheit 5 ausgeführt, welche im gezeigten Beispiel mobil und in Form eines Kontrollfahrzeugs ausgebildet ist. Die Detektoreinheit bzw. das Kontrollfahrzeug 5 bewegt sich beispielsweise auf einer zweiten Fahrspur 3" der Fahrbahn 3 in einer Fahrtrichtung 4', welche bevorzugt - jedoch nicht notwendigerweise - antiparallel zur Fahrtrichtung 4 des zu kontrollierenden Fahrzeugs 2 ist. Es versteht sich, dass die Detektoreinheit 5 auch stationär sein könnte, beispielsweise am Straßenrand der Fahrbahn 3 oder Fahrspur 3' aufgestellt.

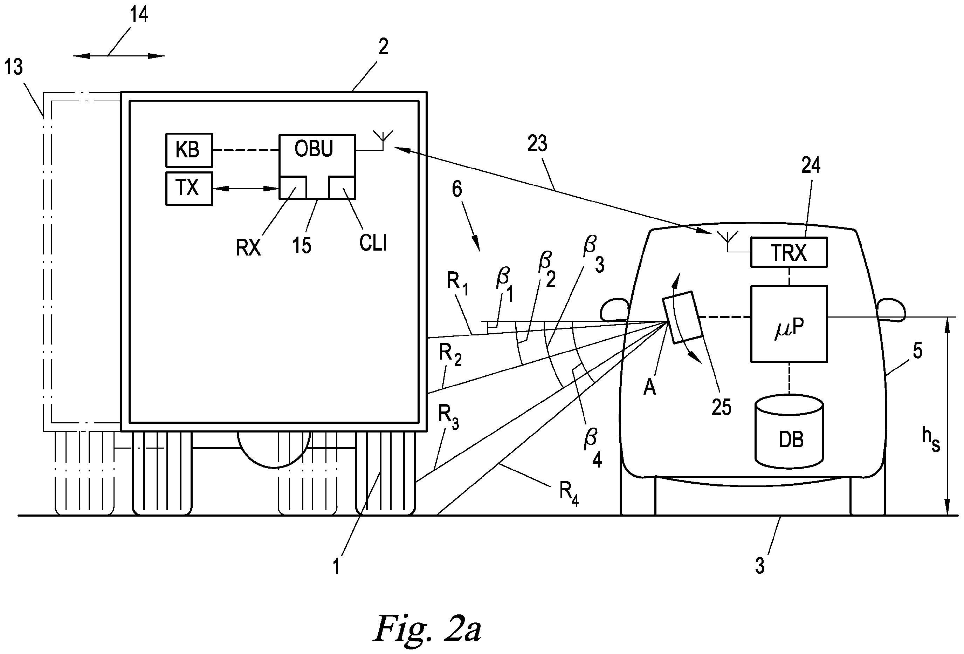

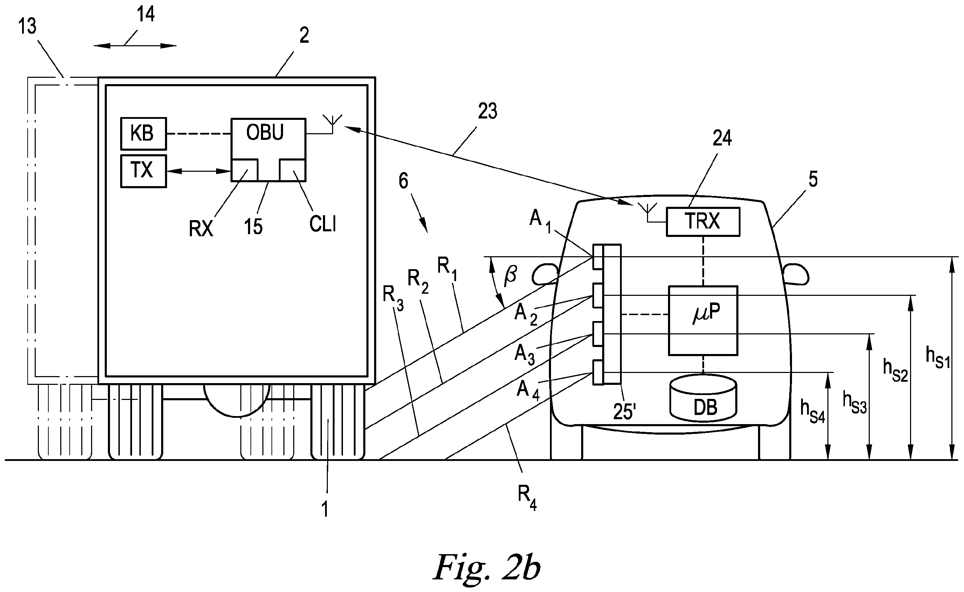

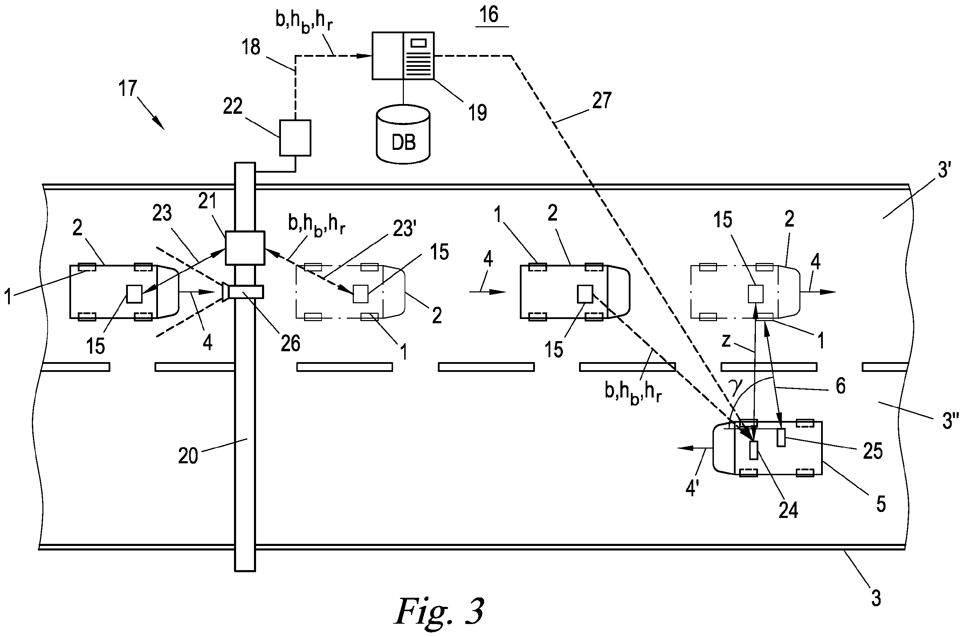

Die Detektoreinheit 5 sendet einen Messstrahl 6, beispielsweise einen Ultraschall-, Lidar- oder bevorzugt Radar-Messstrahl, auf das Fahrzeug 2 bzw. dessen Räder 1 bei der Passage aus, um so die Räder 1 zu detektieren. Aus den Seitenansichten der Fig. 1a - 1d ist ersichtlich, dass der Messstrahl 6 von vorne (Fig. 1a), schräg von vorne-oben (Fig. 1b), von oben (Fig. 1c) oder in jeder anderen Richtung der Zeichnungsebene von Fig. 1 unter einem Winkel $\alpha$ zur Vertikalen auf das Rad 1 gerichtet werden kann. Aus Fig. 2a ist ersichtlich, dass der Messstrahl 6 in Fahrtrichtung 4 gesehen unter unterschiedlichen Winkeln $\beta$ zur Horizontalen, z.B. von einer Ausstrahlposition A auf einer vorgegebenen Höhe $h_s$ über der Fahrbahn 3, von der Detektoreinheit 5 ausgesandt werden kann, was durch vier beispielhafte Strahlenverläufe $R_1$, $R_2$, $R_3$ und $R_4$ des Messstrahls 6 veranschaulicht ist. In Fig. 2b ist erkennbar, dass der Messstrahl 6 z.B. auch von Ausstrahlpositionen $A_1$, $A_2$, $A_3$, $A_4$ auf unterschiedlichen Höhen $h_{S1}$, $h_{S2}$, $h_{S3}$, $h_{S4}$ aus unter z.B. gleichen Winkeln $\beta$ zur Horizontalen ausgesandt werden kann. In der Draufsicht von Fig. 3 ist veranschaulicht, dass der Messstrahl 6 zur Fahrtrichtung 4 (bzw. 4') unterschiedliche Winkel $\gamma$ einnehmen kann, z.B. von der Detektoreinheit 5 schräg nach vorne gerichtet.

Die Detektoreinheit 5 ist ein Dopplerdetektor und wertet, wie in der Technik bekannt, die Empfangsfrequenz des vom Fahrzeug 2 bzw. seinen Rädern 1 reflektierten Messstrahl 6 aus, wobei aus der dopplereffektbedingten Frequenzverschiebung $\Delta f$ zwischen ausgesandtem und reflektiertem Messstrahl 6 die in Richtung des Messstrahls 6 liegende (projizierte) Komponente $v_p$ der Relativgeschwindigkeit v des Fahrzeugs 2 bzw. der Tangentialgeschwindigkeit $v_t$ des Rades 1 am jeweiligen Punkt P des Auftreffbereichs des Messstrahls 6 ermittelt werden kann. In den rechten Hälften der Fig. 1a - 1d ist diese dopplereffektbedingte Frequenzverschiebung, kurz Dopplerverschiebung, $\Delta f$ in ihrem zeitlichen Verlauf über der Zeit t aufgetragen.

Wenn der Messstrahl 6 parallel zur Ebene der Fahrbahn 3 ausgestrahlt wird ($\alpha = 90°$, $\beta = 0°$, $\gamma \neq 90°$), dann ergibt sich der in Fig. 1a gezeigte Dopplerverschiebungsverlauf, mit einem sprunghaften Anstieg 9, sobald der Messstrahl 6 die sich mit der Geschwindigkeit v bewegende Karosserie des Fahrzeugs 2 trifft, und einem zusätzlichen Sprung 10 während der Passage des Rads 1. Wenn der Messstrahl 6 etwas schräg von oben auf das Rad 1 bzw. Fahrzeug 2 trifft ($0 < \alpha < 90°$, $0 < \beta < 90°$, $0 < \gamma < 180°$), ergibt sich der in Fig. 1b gezeigte Dopplerverschiebungsverlauf mit einem Anstieg (oder, je nach Betrachtungs- und Passagerichtung, Abfall) 11 während der Passage eines Rads 1. Eine Strahlrichtung schräg von oben mit $\alpha = 0°$, $0 < \beta \leq 90°$ und $\gamma = 90°$ führt zu den in Fig. 1c gezeigten Anstiegen (oder, je nach Betrachtungsrichtung, Abfällen) 11, welche um die Eigengeschwindigkeit v des Fahrzeugs 2 bereinigt sind.

Fig. 1d zeigt, dass bei einem real ausgedehnten, nicht ideal-punktförmigen Strahlquerschnitt des Messstrahls 6 im Auftreffbereich 12 des Messstrahls 6 auf dem Rad 1 bzw. Fahrzeug 2 stets eine Superposition der von unterschiedlichen Punkten P im Auftreffbereich 12 herrührenden unterschiedlichen (Tangential-) Geschwindigkeiten bzw. projizierten

Geschwindigkeiten $v_p$ auftritt, welche bei der Passage eines Rads 1 zu einem Empfangsfrequenzgemisch, d.h. einer Aufsplitterung bzw. Aufspreizung F des Dopplerverschiebungsverlaufs führt, die größer ist als jene Frequenzaufspreizung $F_0$, welche bloß bei der Passage der Karosserie des Fahrzeugs 2 auftritt. Auch eine solche Frequenzaufspreizung F kann ebenfalls als Kriterium für das Auftreten eines Rades 1 festgelegt werden.

Das Auftreten eines Rades 1 an einem passierenden Fahrzeug 2 kann daher z.B. durch einen Frequenzsprung 10, einen Anstieg oder Abfall 11 und/oder eine Frequenzaufspreizung F detektiert werden, die jeweils einen vorgegebenen Schwellwert überschreiten.

Für die genannte Dopplerauswertung und -detektion kann die Detektoreinheit 5 von jeder in der Technik bekannten Art sein, sei es mit einem kontinuierlichen, modulierten oder einem gepulsten Messstrahl 6. Bei einem kontinuierlichen Messstrahl 6 kann eine Dopplerfrequenzverschiebung zwischen den Eigenfrequenzen ("Trägerfrequenzen") des ausgesandten und des reflektierten Messstrahl 6 z.B. durch Interferenzmessung ermittelt werden. Bei einem gepulsten oder modulierten Messstrahl kann eine Dopplerverschiebung zwischen den Impulsraten bzw. Modulationsfrequenzen des ausgesandten und des reflektierten Messstrahls 6 gemessen werden. Alle solche Eigen-, Träger-, Impuls- oder Modulationsfrequenzen werden unter den hier verwendeten Begriffen der "Sendefrequenz" des Messstrahls 6 und "Empfangsfrequenz" des reflektierten Messstrahls 6 verstanden, d.h. der Begriff Empfangsfrequenz umfasst jedwede durch einen Dopplereffekt beeinflussbare Frequenz des Messstrahls 6.

Die Fig. 2a und 2b zeigen anhand der beispielhaften Verläufe $R_1$ bis $R_4$ des Messstrahls 6 unter unterschiedlichen Ausstrahlrichtungen $\beta_1$ bis $\beta_4$ (Fig. 2a) bzw. von unterschiedlichen Ausstrahlpositionen $A_1$, $A_2$, $A_3$, $A_4$ aus (Fig. 2b) und für verschiedene Querabpositionen 13 des Fahrzeugs 1 gegenüber der Detektoreinheit 5 (Pfeil 14), dass es Ausstrahlrichtungen $\beta$ bzw. Ausstrahlpositionen A geben kann, an denen der Messstrahl 6 das Fahrzeug 2 und/oder dessen Räder 1 verfehlt. Um dies zu verhindern, dient das nun im Folgenden beschriebene Verfahren.

Das Verfahren beruht auf der Verwendung von Onboard-Units (OBUs) 15, die jeweils von einem Fahrzeug 2 mitgeführt werden, um diesem die Teilnahme an einem Straßenmaut- oder -kommunikationssystem zu gestatten. Da die Detektion von Rädern 1 eines Fahrzeugs 2 gerade für Straßenmautsysteme häufig als Grundlage zur Gebührenbemessung herangezogen wird, können die OBUs 15 in solchen Straßenmautsystemen gleichzeitig für die hier geschilderten Zwecke mitverwendet werden.

Fig. 3 zeigt ausschnittsweise ein Straßenmautsystem 16, das eine Vielzahl geographisch verteilter Kontrolleinrichtungen 17 (nur eine gezeigt) umfasst, die beispielsweise entlang der Fahrbahn 3 mit gegenseitigen Abständen aufgestellt sind. Die Kontrolleinrichtungen 17 stehen über Datenleitungen 18 mit einer Zentrale 19 des Straßenmautsystems 16 in Verbindung. Das Straßenmautsystem 16, insbesondere seine Kontrolleinrichtungen 17, vermauten (vergebühren) Ortsnutzungen von Fahrzeugen 2, z.B. das Befahren der Fahrbahn 3.

Zu diesem Zweck können die Kontrolleinrichtungen 17 beispielsweise als Funkbaken mit einem auf einer Straßenbrücke ("gantry") 20 angeordneten Sendeempfänger 21 und angeschlossenem Bakenrechner 22 ausgeführt sein und über den Sendeempfänger 21 eine Kurzreichweiten-Funkkommunikation 23 (dedicated short range communication, DSRC) mit der OBU 15 eines passierenden Fahrzeugs 2 abwickeln. Die DSRC-Funkkommunikation 23 kann beispielsweise zu einer Mauttransaktion führen, welche über den Bakenrechner 22 und die Datenverbindung 18 an die Zentrale 19 gemeldet und/oder in der OBU 15 gespeichert wird.

Die Kontrolleinrichtungen (Funkbaken) 17, die OBUs 15 und deren interne Sendeempfänger zur Abwicklung der DSRC-Funkkommunikationen 23 können nach allen bekannten DSRC-Standards aufgebaut sein, insbesondere CEN- bzw. UNI-DSRC, ITS-G5 oder IEEE-WAVE (wireless access in vehicular environments), aber auch RFID (radio frequency identification). Jede DSRC-Funkkommunikation 23 im Zuge einer Passage einer Funkbake 17 kann beispielsweise ein bestimmtes Benutzungsentgelt von einem Guthabenkonto in der Zentrale 19 und/oder der OBU 15 abbuchen und stellt dann eine "Abbuchungstransaktion" dar; die DSRC-Funkkommunikationen 23 können jedoch auch Identifikations-, Wartungs-, Softwareaktualisierungs-Transaktionen od.dgl. im Rahmen des Straßenmautsystems 16 bilden.

Insbesondere können die DSRC-Funkkommunikationen 23 auch zur Funkabfrage (Auslesung) von in den OBUs 15 gespeicherten Daten wie Stammdaten, Identifizierungsdaten, Transaktionsdaten, Aufzeichnungsdaten usw. herangezogen werden. Solche Funkabfragen 23 können nicht nur von den ortsfesten Kontrolleinrichtungen bzw. Funkbaken 17 aus erfolgen, sondern auch von "mobilen" Funkbaken 17 in Form einer als Kontrollfahrzeug ausgebildeten Detektoreinheit 5. Mit anderen Worten kann auch die Detektoreinheit 5 als Funkbake 17 fungieren, und im übrigen auch umgekehrt eine Funkbake 17 als Detektoreinheit 5. Alles, was über die DSRC-Kommunikationsfähigkeit der Funkbake 17 dargelegt wird, trifft daher auch auf die Detektoreinheit 5 zu, welche zu diesem Zweck mit einem eigenen Sendeempfänger 24 ausgestattet ist, und umgekehrt.

Funkabfragen von OBUs 15 über DSRC-Funkkommunikationen 23 können im übrigen auch in satellitennavigationsbasierten (global navigation satellite system, GNSS-) Straßenmautsystemen 16 durchgeführt werden, in welchen sich die OBUs 15 statt durch ein Netz terrestrischer Funkbaken 17 jeweils autark mittels eines GNSS-Empfängers verorten und ihre Orte oder daraus ermittelte Mauttransaktionen z.B. über das Funkbakennetz oder ein gesondertes Mobilfunknetz an die Zentrale 19 senden: Auch hier können die OBUs 15 mit DSRC-Sendeempfängern für Funkabfragen durch Funkbaken (Kontrolleinrichtungen) 17 oder Kontrollfahrzeuge (Detektoreinheiten) 5 ausgestattet werden. Das hier beschriebene Verfahren und die hier erörterte Detektoreinheit 5 eignen sich daher zum Zusammenwirken sowohl mit bakenbasierten als auch mit satellitenbasierten Straßenmautsystemen 16.

Eine Funkkommunikation 23 zwischen dem Sendeempfänger 24 der Detektoreinheit 5 und dem internen (nicht dargestellten) Sendeempfänger der OBU 15 wird in weiterer Folge dazu herangezogen, den Abstand zwischen der Detektoreinheit 5 und dem zu kontrollierenden Fahrzeug 2 zu ermitteln und in Abhängigkeit davon die Ausstrahlrichtung $\beta$ und/oder die Ausstrahlposition A des Messstrahls 6 der Detektoreinheit 5 zu steuern. Dazu wird eine Detektoreinheit 5 eingesetzt, deren Messstrahl 6 auch dementsprechend steuerbar ist: Wenn die Detektoreinheit 5 auf Basis eines Doppler-Radars arbeitet, kann dies beispielsweise durch ein mechanisches Verschwenken oder Verstellen einer Richtantenne 25 geschehen, über die der Messstrahl 6 ausgesandt und empfangen wird. Anstelle einer Richtantenne 25 könnte auch ein Antennenarray verwendet werden, dessen Ausstrahlungsrichtung durch entsprechende Phasensteuerung verstellbar ist, wie in der Technik bekannt. Alternativ oder zusätzlich könnte die Detektoreinheit 5 auch eine Gruppe 25' von mehreren Antennen oder Antennenarrays haben, die beispielsweise in den Höhen $h_{S1}$ bis $h_{S4}$ voneinander beabstandet angeordnet und umschaltbar sind, um unterschiedliche Ausstrahlpositionen $A_1$ bis $A_4$ zu erzielen. Die Strahlverläufe $R_1$ bis $R_4$ von den verschiedenen Ausstrahlpositionen $A_1$ bis $A_4$ können dabei auch unterschiedliche Winkel $\beta$ haben. Im Fall einer Detektoreinheit 5, die auf Basis eines Doppler-Lidars arbeitet, könnte die Ausstrahlrichtung $\beta$ und/oder -position A des Messstrahls 6 auch mit Hilfe einer entsprechenden Anordnung von Ablenkspiegeln verändert werden, wie in der Technik bekannt. Im Fall einer auf Ultraschall-Dopplerauswertung basierenden Detektoreinheit 5 könnten entsprechend mechanisch verstellbare Ultraschall-Wandler oder phasensteuerbare Ultraschall-Wandler-Arrays eingesetzt werden, usw. usf.

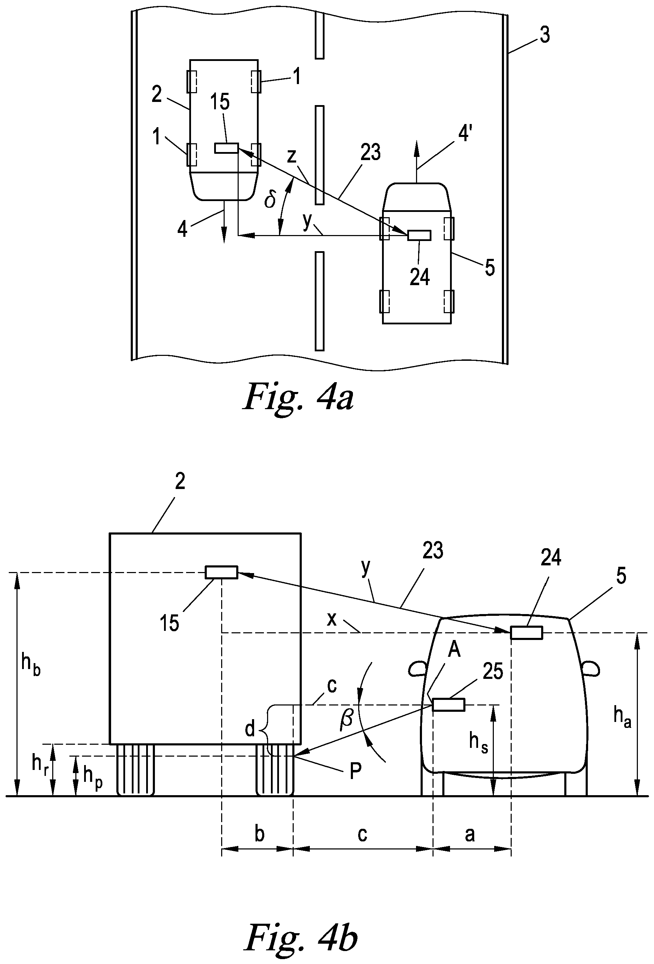

Das Verfahren beruht ferner auf der Verwendung von Sendeempfängern 24 in der Detektoreinheit 5, welche in der Lage sind, die Länge der Kommunikationsstrecke einer Funkkommunikation 23, d.h. die Entfernung z zwischen Sendeempfänger 24 und OBU 15, sowie die Richtung der OBU 15 zum Sendeempfänger 24 zu messen. Dies ist in den Fig. 4a und 4b im Detail gezeigt.

Gemäß Fig. 4a wird unter der "Richtung" der OBU 15 des Fahrzeugs 2 gegenüber dem Sendeempfänger 24 der Detektoreinheit 5 zumindest der zur Ebene der Fahrbahn 3 parallele Winkel $\delta$ der gedachten Verbindungslinie zwischen OBU 15 und Sendeempfänger 24 bezogen auf eine Normale zur Fahrtrichtung 4, genauer zur Fahrtrichtung 4' der Detektoreinheit 5, bezeichnet.

In einem ersten Schritt des Verfahrens wird aus einer zwischen OBU 15 und Sendeempfänger 24 abgewickelten Funkkommunikation 23 die Richtung $\delta$ und Entfernung z der OBU 15 zum Sendeempfänger 24 gemessen. Für diese Messung kann der Sendeempfänger 24 beispielsweise mehrere Antennen oder ein Antennenarray haben, in dem durch Laufzeit- und/oder Phasenmessungen die Empfangsrichtung $\delta$ eines im Zuge der Funkkommunikation 23 von der OBU 15 gesendeten und im Sendeempfänger 24 empfangenen Datenpakets ermittelt werden kann. Die Entfernung z kann beispielsweise aus Signallaufzeitmessungen ermittelt werden, oder sogar durch Übersendung von GNSS-Positionsmessungen der OBU 15, welche sie dem Sendeempfänger 24 mitteilt, der diese mit eigenen GNSS-Positionsmessungen vergleicht.

Um aus der Entfernung z und der Richtung $\delta$ den Passageabstand zwischen Fahrzeug 2 und Detektoreinheit 5 und insbesondere die Lage der Räder 1 gegenüber der Ausstrahlposition A des Messstrahls 6 zu ermitteln, ist die Kenntnis einerseits des Montageorts der OBU 15 auf dem Fahrzeug 2 und andererseits der Lage des Sendeempfängers 24 gegenüber der Ausstrahlposition A der Detektoreinheit 5 erforderlich.

Der Montageort der OBU 15 auf dem Fahrzeug 2 ist nur hinsichtlich der Relativposition R der OBU 15 gegenüber den Rädern 1 von Interesse, und insbesondere hinsichtlich des Querabstands b der OBU 15 zur Außenseite des Rades 1 und der Montagehöhe $h_b$ der OBU 15 über der Fahrbahn 3 in Bezug auf die Höhe $h_r$ des Rades 1 über der Fahrbahn 3; der Montageort der OBU 15 in Fahrtrichtung 4 auf dem Fahrzeug 2 ist hier nicht unbedingt notwendig.

Auf Seiten der Detektoreinheit 5 kann die Lage L des Sendeempfängers 24 gegenüber der Ausstrahlposition A des Messstrahls 6 durch den Querabstand a des Sendeempfängers 24 zur Ausstrahlposition A sowie aus der Differenz $h_a - h_s$ zwischen der Montagehöhe $h_a$ des Sendeempfängers 24 und der Montagehöhe $h_s$ der Ausstrahlposition A über der Fahrbahn 3 berechnet werden.

Die Lage L bzw. $(a, h_a - h_s)$ des Sendeempfängers 24 in der Detektoreinheit 5 ist stets bekannt. Die Relativposition R bzw. $(b, h_b - h_r)$ der OBU 15 auf dem Fahrzeug 2 kann je nach Montageort variieren, beispielsweise wenn der Benutzer die OBU 15 selbst an der Innenseite der Windschutzscheibe an unterschiedlichen Positionen anbringt. Gemäß einer ersten Variante des Verfahrens wird die Relativposition R der OBU 15 auf dem Fahrzeug 2 dem Benutzer vorgegeben, d.h. entsprechend der Type bzw. Klasse seines Fahrzeugs 2 muss er die OBU 15 an einer vorgegebenen Relativposition anbringen. Die Relativposition R kann dann als bekannt angesehen werden; beispielsweise kann sie fahrzeugspezifischen Tabellen entnommen werden.

Eine solche fahrzeugspezifische Tabelle, die eine Zuordnung zwischen möglichen Typen bzw. Klassen CL von Fahrzeugen 2 und deren bekannten Relativpositionen R enthält, kann beispielsweise wie in der folgenden Tabelle 1 aufgebaut sein:

Tabelle 1

| CL | R (b / $h_b$-$h_r$) |
|---|---|
| "PKW" | (0,8 m / 0,6 m) |
| "VAN" | (1,0 m / 1,0 m) |
| "LKW" | (1,2 m / 1,3 m) |
| "BUS" | (1,2 m / 1,4 m) |
| "BUS-Pos1" | (1,2 m / 1,4 m) |
| "BUS-Pos2" | (1,3 m / 1,6 m) |
| ⋮ | ⋮ |

Es ist auch möglich, für verschiedene Montagepositionen einer OBU 15 in ein und demselben Fahrzeug 2, z.B. an der Windschutzscheibe oben in der Mitte ("Position 1") oder an der Windschutzscheibe im rechten unteren Eck ("Position 2"), jeweils eigene Fahrzeugklassen CL zu definieren und als Fahrzeugklassenangabe CLI in der OBU 15 zu speichern, wie anhand der beispielhaften Fahrzeugklassen CL = "BUS-Pos1" (für "Position 1") und CL = "BUS-Pos2" (für "Position 2") in Tabelle 1 gezeigt.

Die Tabelle 1 kann beispielsweise in einer Datenbank DB der Kontrolleinrichtung 17 und/oder der Zentrale 19 und/oder des Kontrollfahrzeugs 5 gespeichert sein. In der OBU 15 kann dann - gleichsam als "grobe" Angabe der Relativposition R - eine Angabe CLI ("class indication") über die Klasse CL des Fahrzeugs 2 gespeichert sein.

Die Klassenangabe CLI kann beispielsweise bei der Fertigung der OBU 15, sei es in der Fabrik oder anlässlich der Auslieferung an einen Benutzer in einer Programmierstation für die benutzerspezifische Programmierung (Personalisierung) der OBU 15, eingespeichert werden. So können dem Benutzer z.B. drei Klassen CL zur Auswahl angeboten werden, unter denen er eine auswählt, welche dann im Zuge der OBU-Personalisierung einprogrammiert wird. Die so vorbereitete OBU 15 ist dann zur Anbringung in einem Fahrzeug 2 der jeweiligen eingespeicherten (programmierten) Fahrzeugklasse CL bestimmt. Der Benutzer erwirbt dann beispielsweise eine für die Fahrzeugklasse CL = "BUS" gefertigte bzw. programmierte OBU 15, deren Montagevorschrift besagt, dass sie z.B. in einem Querabstand b = 1,2 m von den Rädern und in einer Höhe $h_b$ - $h_r$ = 1,4 m über den rechten Rädern an der Windschutzscheibe anzubringen ist.

Alternativ kann der Benutzer die Fahrzeugklassenangabe CLI auch selbst in die OBU 15 einspeichern, z.B. durch Benutzereingabe über eine Tastatur KB der OBU 15. Diese kann beispielsweise verschiedene Tasten für den jeweiligen Einsatzzweck der OBU 15 aufweisen, z.B. eine Taste mit der Aufschrift "PKW" zum Setzen bzw. Einspeichern der Fahrzeugklassen CL = "PKW" in der OBU 15; eine Taste mit der Aufschrift "LKW" zum Setzen der Fahrzeugklassen CL = "LKW"; usw. usf.

Eine weitere Möglichkeit ist, dass die Fahrzeugklassenangabe CLI mit Hilfe eines Datenträgers TX (Fig. 2a, 2b) in die OBU 15 eingegeben wird. Der Datenträger TX kann beispielsweise eine Chipkarte, SIM-Karte, Magnetkarte usw. sein, die z.B. in ein Lesegerät RX der OBU 15 eingeführt und über elektrische Kontakte, induktiv oder kapazitiv verbunden wird, wonach die OBU 15 die Klassenangabe CLI aus dem Datenträger TX ausliest. Der Datenträger TX könnte aber auch ein optischer Datenträger sein, beispielsweise ein Papierstück oder ein Aufkleber mit einem ein- oder zweidimensionalen Barcode oder einer anderen optischen Markierung, welcher bzw. welche von einem optischen Sensor RX der OBU 15 gelesen wird. Alternativ ist der Datenträger TX ein Funkchip, z.B. ein Transponder nach dem NFC-(near field communication) oder RFID- (radio frequency identification) -Standard, und das Lesegerät RX der OBU 15 ist ein NFC- oder RFID-Lesegerät, um die Klassenangabe CLI über Kurzreichweitenfunk aus dem Datenträger TX auszulesen. Ein solcher Funkchip, z.B. RFID- oder NFC-Chip, könnte beispielsweise in einem Aufkleber untergebracht sein, welcher vom Benutzer auf die OBU 15 aufgeklebt wird oder bei der Personalisierung der OBU 15 in der Fabrik oder bei der Auslieferung an der OBU 15 angebracht wird.

Anstelle einer auf solche Fahrzeugklassen CL "vergröberten" bzw. parametrisierten Angabe der Relativposition R könnte selbstverständlich auch direkt der numerische Wert der Relativposition R in der OBU 15 gespeichert werden, z.B. in der Form (1,2 m / 1,3 m) im Falle eines Fahrzeugs 2 vom Typ "LKW", und zwar sowohl bei der Fertigung als auch später vom Benutzer selbst. Die genauen numerischen Werte der Relativposition R könnten auch bei der Fertigung oder später vom Benutzer im Betrieb ausgemessen und in der OBU 15 gespeichert werden, z.B. über die Tastatur KB der OBU 15 oder den Datenträger TX.

Die in der OBU 15 gespeicherte Relativposition R kann in weiterer Folge im Zuge einer Funkkommunikation 23 aus der OBU 15 ausgelesen werden, sei es direkt in Form der numerischen Werte b bzw. $h_b$ - $h_r$ oder in Form der Klassenangabe CLI. Eine aus der OBU 15 ausgelesene Klassenangabe CLI kann mit Hilfe der Tabelle 1 der Datenbank DB in die numerische Form (b/$h_b$ - $h_r$) "rückübersetzt" werden. Wird die Relativposition R hingegen gleich direkt in numerischen Form in der OBU 15 gespeichert, kann die Datenbank DB entfallen.

Es versteht sich, dass die numerischen Werte der Relativposition R auch nur eine einzige Abmessung sein können, z.B. der Querabstand b oder die Montagehöhe $h_b - h_r$ über dem Rad, oder aber ein komplettes Tripel aus Querabstand b, Montagehöhe $h_b - h_r$ und Montageort der OBU 15 in Fahrtrichtung 4 auf dem Fahrzeug 2.

In einer weiteren Ausführungsform wird die Relativposition R der OBU 15 auf dem Fahrzeug 2 gemessen und das Messergebnis entweder in der OBU 15 selbst oder in einer Datenbank im Straßenmautsystem 16, z.B. einer der Funkbaken 17, einem Proxyrechner des Straßenmautsystems oder der Zentrale 19, gespeichert, sei es in der genauen Form ($b/h_b - h_r$) oder "vergröbert" als Klassenangabe CLI. Dieser Messvorgang kann beispielsweise von der Kontrolleinrichtung bzw. Funkbake 17 durchgeführt werden, was in Fig. 3 schematisch angedeutet ist. Die Funkbake 17 kann zu diesem Zweck über einen Scanner 26, z.B. einen Laserscanner, verfügen, welcher das Fahrzeug 2 bei der Passage geometrisch abtastet; gleichzeitig kann der Sendeempfänger 21 der Funkbake 17 durch Funktriangulation, z.B. mittels Phasenmessungen an mehreren Antennen oder in einem Antennenarray, die Relativposition R unter Referenzierung der Funktriangulation auf das Abtastbild des Scanners 26 messen. Anstelle eines Scanners 26 könnte z.B. auch eine Kamera verwendet werden, welche beispielsweise ein Frontbild des passierenden Fahrzeugs 2 anfertigt, in dem wieder die Relativposition R der OBU 15 durch Funktriangulation mittels des Sendeempfängers 21 referenziert wird, oder in welchem Frontbild eine insbesondere an die Innenseite der Windschutzscheibe geklebte OBU 15 durch optisches Erkennen ihrer Relativposition R detektiert wird.

Die solcherart von einer der Detektoreinheit 5 vorgeordneten Kontrolleinrichtung 17 gemessene Relativposition R kann dann beispielsweise über eine Funkkommunikation 23' vom Sendeempfänger 21 in der OBU 15 gespeichert oder in einer Datenbank des Straßenmautsystems 16, z.B. in der Funkbake 17 oder über den Datenweg 18 in der Zentrale 19, hinterlegt werden.

In weiterer Folge des Verfahrens kann die Relativposition R, wenn die Detektoreinheit 5 diese Werte zur Steuerung des Messstrahls 6 benötigt, entweder über eine Funkkommunikation 23 von der OBU 15 empfangen oder für eine bestimmte OBU 15 über einen Funk-Datenkanal 27 von der Datenbank der Funkbake 17 oder der Zentrale 19 anfordern, wo sie entsprechend herausgesucht wird. Auch ist es möglich, hiefür einen gesonderten Zwischenspeicher oder Proxyrechner im Straßenmautsystem 16 vorzusehen, der die benötigten Daten der Detektoreinheit 5 besonders rasch bereitstellen kann; der Zwischenspeicher kann stationär oder mobil sein und die Daten aus der genannten Datenbank regelmäßig, z.B. einmal am Tag, abrufen, um sie der Detektoreinheit 5 zur Verfügung zu stellen.

Wenn die Relativposition R, die über die Funkkomunikation 23 aus der OBU 15 ausgelesen wird, dort in Form einer Fahrzeugklassenangabe CLI gespeichert ist, wird sie wie erörtert unter Zuhilfenahme der Tabelle 1 der Datenbank DB in die gewünschten numerischen Werte, z.B. das Dupel ($b/h_b - h_r$), übersetzt, bevor sie für die weiteren Berechnungen verwendet wird.

In Kenntnis von Lage L ($a, h_a - h_s$) und Relativposition R ($b, h_b - h_r$) kann nun mittels geometrischer Berechnungen die Ausstrahlrichtung, insbesondere deren Winkel $\beta$, und/oder die Ausstrahlposition A, insbesondere deren Höhe $h_s$, für den Messstrahl 6 der Detektoreinheit 5 berechnet werden, z.B. in der folgenden Art und Weise.

Aus Entfernung z und Richtung $\delta$ ergibt sich die normal zur Fahrtrichtung 4 projizierte Entfernung y zu

$$y = z \cos \delta \qquad (1)$$

und die parallel zur Fahrbahn 3 bzw. Horizontalen projizierte Entfernung x zwischen OBU 15 und Sendeempfänger 24 zu

$$x = \sqrt{y^2 - \left(h_b - h_a\right)^2} \qquad (2)$$

In Kenntnis der Querabstände a, b aus der empfangenen Relativposition R und der bekannten Lage L ergibt sich der Querabstand c zwischen Ausstrahlposition A und Rad 1 zu

$$c = x - b - a \qquad (3)$$

Der Vertikalabstand zwischen Ausstrahlposition A auf der Höhe $h_s$ und einem Auftreffpunkt P auf dem Rad 1, welcher auf einer prozentuellen Höhe F der Radhöhe $h_r$ liegt, z.B. F = 70%, beträgt

$$d = h_s - F \cdot h_r \qquad (4)$$

Damit ergibt sich die gewünschte Ausstrahlrichtung β, speziell für die Ausführungsform von Fig. 2a mit variabler Ausstrahlrichtung β, zu

$$\beta = \arctan \frac{d}{c} \qquad\qquad (5)$$

Alternativ ergibt sich die gewünschte Ausstrahlposition A auf einer gewünschten Ausstrahlhöhe $h_s$, speziell für die Ausführungsform von Fig. 2b mit unterschiedlich hohen Ausstrahlpositionen $A_1$ - $A_4$, zu

$$h_s = F \cdot h_r + c \cdot \tan \beta \qquad\qquad (6)$$

Die Ausstrahlrichtung - im gezeigten Beispiel vereinfacht repräsentiert durch den Winkel β, allgemein können darunter jedoch einer oder mehrere der Winkel α, β, γ verstanden werden - und die Ausstrahlposition A - im gezeigten Beispiel vereinfacht repräsentiert durch die Höhe $h_s$, allgemein kann die Ausstrahlposition A auch in den beiden verbleibenden Raumrichtungen festgelegt werden - kann somit durch Messen der Richtung γ und der Entfernung z zwischen Onboard-Unit 15 und Sendeempfänger 24 berechnet werden.

Es versteht sich, dass die Detektoreinheit 5 sowohl in der gezeigten mobilen Form als Kontrollfahrzeug als auch in stationärer Form z.B. unter Verwendung bestehender Funk-Infrastruktur wie WAVE- oder DSRC-Funkbaken eines Straßenmautsystems oder WLAN-Funkbaken einer straßenseitigen Internet-Infrastruktur, realisiert werden kann. Dadurch können z.B. bereits vorhandene Sendeempfangsteile von WLAN-, WAVE- oder DSRC-Funkbaken als Sendeempfangsteil einer Doppler-Detektoreinheit 5 verwendet werden. Das Verfahren der Erfindung kann auf diese Weise z.B. als eine auf einer herkömmlichen mobilen oder stationären WLAN-, WAVE- oder DSRC-Kontrolleinrichtung oder -Funkbake laufende Softwareapplikation implementiert werden.

Bislang wurde davon ausgegangen, dass die Sendefrequenz des Messstrahls 6 konstant ist, d.h. ihr zeitlicher Verlauf ein konstanter Verlauf ist. Es ist jedoch auch möglich, dass die Detektoreinheit 5 einen Messstrahl 6 mit einem zeitlich nichtkonstanten Sendefrequenzverlauf aussendet, beispielsweise im Falle von Frequency-Hopping-Verfahren, bei denen die Frequenz ständig - nach einem vorgegebenen bzw. bekannten Muster - wechselt. Die aufgezeichneten Empfangsfrequenz(gemisch)verläufe der Fig. 1a - 1d werden relativ zu dem vorbekannten zeitlichen Verlauf der Sendefrequenz des Messstrahls 6 - sei er konstant oder wechselnd - aufgezeichnet, d.h. auf diesen referenziert bzw. normiert, so dass der Effekt von bekannten Sendefrequenzverläufen kompensiert werden kann.

**Patentansprüche**

1. Verfahren zur Detektion eines sich drehenden Rades (1) eines Fahrzeugs (2) durch Auswerten der Dopplerverschiebung eines Messstrahls (6), welcher von einer vom Fahrzeug (2) passierten Detektoreinheit (5) ausgestrahlt, vom Rad (1) reflektiert und dopplerverschoben zurückerhalten wird,
   wobei das Fahrzeug (2) in einer Relativposition (R) zum Rad (1) eine Onboard-Unit (15) aufweist, die eine Funkkommunikation (23) mit einem Sendeempfänger (24) bekannter Lage (L) in der Detektoreinheit (5) eingehen kann, umfassend:

   Messen von Richtung (δ) und Entfernung (z) der Onboard-Unit (15) zum Sendeempfänger (24) aus zumindest einer Funkkommunikation (23) zwischen diesen; und
   Steuern der Ausstrahlrichtung (α, β, γ) oder Ausstrahlposition (A) des Messstrahls (6) in Abhängigkeit der gemessenen Richtung (δ) und Entfernung (z) und unter Berücksichtigung der genannten Relativposition (R) und Lage (L);
   **dadurch gekennzeichnet, dass** die genannte Relativposition (R) durch Benutzereingabe in der Onboard-Unit (15) gespeichert wird und für die genannte Berücksichtigung über eine Funkkommunikation (23) aus der Onboard-Unit (15) ausgelesen wird.

2. Verfahren nach Anspruch 1, **dadurch gekennzeichnet, dass** die Benutzereingabe über eine Tastatur (KB) der Onboard-Unit (15) erfolgt.

3. Verfahren nach Anspruch 1, **dadurch gekennzeichnet, dass** die Benutzereingabe mit Hilfe eines Datenträgers (TX) erfolgt, in dem die Relativposition (R) gespeichert ist und welcher von der Onboard-Unit (15) ausgelesen wird.

4. Verfahren nach Anspruch 3, **dadurch gekennzeichnet, dass** der Datenträger (TX) an der Onboard-Unit (15) angebracht und über eine Drahtlosverbindung, bevorzugt nach einem RFID- oder NFC-Standard, von der Onboard-Unit (15) ausgelesen wird.

5. Verfahren zur Detektion eines sich drehenden Rades (1) eines Fahrzeugs (2) durch Auswerten der Dopplerverschiebung eines Messstrahls (6), welcher von einer vom Fahrzeug (2) passierten Detektoreinheit (5) ausgestrahlt, vom Rad (1) reflektiert und dopplerverschoben zurückerhalten wird,
   wobei das Fahrzeug (2) in einer Relativposition (R) zum Rad (1) eine Onboard-Unit (15) aufweist, die eine Funkkommunikation (23) mit einem Sendeempfänger (24) bekannter Lage (L) in der Detektoreinheit (5) eingehen kann, umfassend:

   Messen von Richtung ($\delta$) und Entfernung (z) der Onboard-Unit (15) zum Sendeempfänger (24) aus zumindest einer Funkkommunikation (23) zwischen diesen; und
   Steuern der Ausstrahlrichtung ($\alpha$, $\beta$, $\gamma$) oder Ausstrahlposition (A) des Messstrahls (6) in Abhängigkeit der gemessenen Richtung ($\delta$) und Entfernung (z) und unter Berücksichtigung der genannten Relativposition (R) und Lage (L);
   **dadurch gekennzeichnet, dass** die genannte Relativposition (R) bei der Fertigung der Onboard-Unit (15) in diese eingespeichert wird und für die genannte Berücksichtigung über eine Funkkommunikation (23) aus der Onboard-Unit (15) ausgelesen wird.

6. Verfahren zur Detektion eines sich drehenden Rades (1) eines Fahrzeugs (2) durch Auswerten der Dopplerverschiebung eines Messstrahls (6), welcher von einer vom Fahrzeug (2) passierten Detektoreinheit (5) ausgestrahlt, vom Rad (1) reflektiert und dopplerverschoben zurückerhalten wird,
   wobei das Fahrzeug (2) in einer Relativposition (R) zum Rad (1) eine Onboard-Unit (15) aufweist, die eine Funkkommunikation (23) mit einem Sendeempfänger (24) bekannter Lage (L) in der Detektoreinheit (5) eingehen kann, umfassend:

   Messen von Richtung ($\delta$) und Entfernung (z) der Onboard-Unit (15) zum Sendeempfänger (24) aus zumindest einer Funkkommunikation (23) zwischen diesen; und
   Steuern der Ausstrahlrichtung ($\alpha$, $\beta$, $\gamma$) oder Ausstrahlposition (A) des Messstrahls (6) in Abhängigkeit der gemessenen Richtung ($\delta$) und Entfernung (z) und unter Berücksichtigung der genannten Relativposition (R) und Lage (L);
   **dadurch gekennzeichnet, dass** die genannte Relativposition (R) von einer stationären oder mobilen Kontrolleinrichtung (17) gemessen und über eine Funkkommunikation (23') in der Onboard-Unit (15) in Form einer Angabe (CLI) einer Fahrzeugklasse (CL) gespeichert wird und für die genannte Berücksichtigung über eine Funkkommunikation (23) aus der Onboard-Unit (15) ausgelesen wird.

7. Verfahren nach einem der Ansprüche 1 bis 6, **dadurch gekennzeichnet, dass** die genannte Relativposition (R) in der Onboard-Unit (15) in Form einer Angabe (CLI) einer Fahrzeugklasse (CL) gespeichert ist, und dass für die genannte Berücksichtigung die Fahrzeugklassenangabe (CLI) aus der Onboard-Unit (15) ausgelesen wird und mit Hilfe einer Datenbank (DB), die mögliche Fahrzeugklassen (CL) und numerische Werte ($b$, $h_b$ - $h_r$) von Relativpositionen (R) einander zuordnet, in eine Relativposition (R) mit numerischen Werten ($b$, $h_b$ - $h_r$) übersetzt wird.

8. Verfahren nach einem der Ansprüche 1 bis 7, **dadurch gekennzeichnet, dass** das Messen von Richtung ($\delta$) und Entfernung (z) der Onboard-Unit (15) zum Sendeempfänger (24) durch Funktriangulation im Zuge der Funkkommunikation (23) zwischen diesen erfolgt.

9. Verfahren nach Anspruch 8, **dadurch gekennzeichnet, dass** die Funktriangulation mittels Phasenmessungen in einem Antennenarray des Sendeempfängers (24) der Detektoreinheit (5) erfolgt.

10. Verfahren nach einem der Ansprüche 1 bis 9, **dadurch gekennzeichnet, dass** der Messstrahl (6) ein Radarstrahl ist und das Steuern seiner Ausstrahlrichtung ($\alpha$, $\beta$, $\gamma$) durch Phasensteuern eines Antennenarrays (25) der Detektoreinheit (5) erfolgt.

11. Verfahren nach einem der Ansprüche 1 bis 10, **dadurch gekennzeichnet, dass** der Messstrahl (6) ein Radarstrahl ist und das Steuern seiner Ausstrahlposition (A) durch Umschalten zwischen mehreren Antennen (25') der Detektoreinheit (5) erfolgt.

**12.** Verfahren nach einem der Ansprüche 1 bis 11, **dadurch gekennzeichnet, dass** ein Rad (1) detektiert wird, wenn der zeitliche Verlauf der Dopplerverschiebung ($\Delta f$) einen Sprung (10), einen Anstieg (11), einen Abfall (11) oder eine Frequenzaufspreizung (F) jeweils über einem Schwellwert zeigt.

**13.** Verfahren nach einem der Ansprüche 1 bis 12, **dadurch gekennzeichnet, dass** die Detektoreinheit (5) in Form eines Kontrollfahrzeugs ausgebildet ist.

**14.** Verfahren nach einem der Ansprüche 1 bis 13, **dadurch gekennzeichnet, dass** die Funkkommunikation (23, 23') nach den Standards UNI- bzw. CEN-DSRC, ITS-G5, IEEE-WAVE oder RFID erfolgt.

**Claims**

**1.** A method for detecting a rotating wheel (1) of a vehicle (2) by evaluating the Doppler shift of a measuring beam (6), which is emitted by a detector unit (5) passed by the vehicle (2), reflected by the wheel (1) and returned in Doppler-shifted form,
wherein, in a relative position (R) to the wheel (1), the vehicle (2) comprises an onboard unit (15), which can establish radio communication (23) with a transceiver (24) having a known location (L) in the detector unit (5), comprising the following steps:

measuring the direction ($\delta$) and distance (z) of the onboard unit (15) from the transceiver (24) based on at least one radio communication (23) between the same; and
controlling the radiation direction ($\alpha$, $\beta$, $\gamma$) or radiation position (A) of the measuring beam (6) in accordance with the measured direction ($\delta$) and distance (z) and taking into consideration the aforementioned relative position (R) and location (L) ;
**characterized in that** the aforementioned relative position (R) is stored in the onboard unit (15) by user input and is read from the onboard unit (15) by way of radio communication (23) for the purpose of the aforementioned consideration.

**2.** The method according to claim 1, **characterized in that** the user input takes place by way of a keyboard (KB) of the onboard unit (15).

**3.** The method according to claim 1, **characterized in that** the user input takes place with the aid of a data medium (TX), in which the relative position (R) is stored and which is read out by the onboard unit (15).

**4.** The method according to claim 3, **characterized in that** the data medium (TX) is attached to the onboard unit (15) and is read out by the onboard unit (15) via a wireless connection, preferably according to an RFID or NFC standard.

**5.** A method for detecting a rotating wheel (1) of a vehicle (2) by evaluating the Doppler shift of a measuring beam (6), which is emitted by a detector unit (5) passed by the vehicle (2), reflected by the wheel (1) and returned in Doppler-shifted form,
wherein, in a relative position (R) to the wheel (1), the vehicle (2) comprises an onboard unit (15), which can establish radio communication (23) with a transceiver (24) having a known location (L) in the detector unit (5), comprising the following steps:

measuring the direction ($\delta$) and distance (z) of the onboard unit (15) from the transceiver (24) based on at least one radio communication (23) between the same; and
controlling the radiation direction ($\alpha$, $\beta$, $\gamma$) or radiation position (A) of the measuring beam (6) in accordance with the measured direction ($\delta$) and distance (z) and taking into consideration the aforementioned relative position (R) and location (L) ;
**characterized in that** the aforementioned relative position (R) is stored in the onboard unit (15) during production of the same and is read from the onboard unit (15) by way of radio communication (23) for the purpose of the aforementioned consideration.

**6.** A method for detecting a rotating wheel (1) of a vehicle (2) by evaluating the Doppler shift of a measuring beam (6), which is emitted by a detector unit (5) passed by the vehicle (2), reflected by the wheel (1) and returned in Doppler-shifted form,
wherein, in a relative position (R) to the wheel (1), the vehicle (2) comprises an onboard unit (15), which can establish radio communication (23) with a transceiver (24) having a known location (L) in the detector unit (5), comprising the following steps:

measuring the direction ($\delta$) and distance (z) of the onboard unit (15) from the transceiver (24) based on at least one radio communication (23) between the same; and

controlling the radiation direction ($\alpha$, $\beta$, $\gamma$) or radiation position (A) of the measuring beam (6) in accordance with the measured direction ($\delta$) and distance (z) and taking into consideration the aforementioned relative position (R) and location (L) ;

**characterized in that** the aforementioned relative position (R) is measured by a stationary or mobile control device (17) and saved to the onboard unit (15) in the form of a description (CLI) of a vehicle class (CL) by way of radio communication (23') and is read from the onboard unit (15) by way of radio communication (23) for the purpose of the aforementioned consideration.

7.  The method according to any one of claims 1 to 6, **characterized in that** the aforementioned relative position (R) is stored in the onboard unit (15) in the form of a description (CLI) of a vehicle class (CL), and that, for the aforementioned consideration, the vehicle class description (CLI) is read from the onboard unit (15) and is translated into a relative position (R) having numerical values (b, $h_b$ - $h_r$) with the aid of a database (DB), which associates possible vehicle classes (CL) and numerical values (b, $h_b$ - $h_r$) of relative positions (R) with each other.

8.  The method according to any one of claims 1 to 7, **characterized in that** the direction ($\delta$) and distance (z) of the onboard unit (15) from the transceiver (24) are measured by radio triangulation over the course of the radio communication (23) between the unit and the transceiver.

9.  The method according to claim 8, **characterized in that** the radio triangulation takes place by way of phase measurements in an antenna array of the transceiver (24) of the detector unit (5).

10. The method according to any one of claims 1 to 9, **characterized in that** the measuring beam (6) is a radar beam, and that the radiation direction ($\alpha$, $\beta$, $\gamma$) thereof is controlled by phase control of an antenna array (25) of the detector unit (5).

11. The method according to any one of claims 1 to 10, **characterized in that** the measuring beam (6) is a radar beam, and that the radiation position (A) thereof is controlled by switching between a plurality of antennas (25') of the detector unit (5).

12. The method according to any one of claims 1 to 11, **characterized in that** a wheel (1) is detected when the chronological sequence of the Doppler shift ($\Delta$f) indicates a jump (10), an increase (11), a drop (11) or a spread spectrum (F) above a respective threshold value.

13. The method according to any one of claims 1 to 12, **characterized in that** the detector unit (5) is configured in the form of a control vehicle.

14. The method according to any one of claims 1 to 13, **characterized in that** the radio communication (23, 23') takes place according to the UNI or CEN-DSRC, ITS-G5, IEEE-WAVE or RFID standards.

**Revendications**

1.  Procédé pour la détection d'une roue (1) en rotation d'un véhicule (2) par l'exploitation du décalage Doppler d'un rayonnement de mesure (6), lequel est émis par une unité de détection (5) passée par le véhicule (2), est réfléchi par la roue (1) et est retrouvé à l'état décalé par décalage Doppler, dans lequel le véhicule (2) présente une unité embarquée (15), dans une position relative (R) par rapport à la roue (1), qui peut entrer en communication par radio (23) avec un émetteur-récepteur (24) de localisation connue (L) dans l'unité de détection (5), comprenant :

la mesure de la direction ($\delta$) et de l'éloignement (z) de l'unité embarquée (15) par rapport à l'émetteur-récepteur (24) à partir d'au moins une communication par radio (23) entre ceux-ci ; et

la commande de la direction du rayonnement ($\alpha$, $\beta$, $\gamma$) ou de la position de rayonnement (A) du rayonnement de mesure (6) en fonction de la direction ($\delta$) mesurée et de l'éloignement (z) et en tenant compte de ladite position relative (R) et de la localisation (L) ;
**caractérisé en ce que** ladite position relative (R) est mémorisée dans l'unité embarquée (15) par une entrée d'utilisateur et est lue à partir de l'unité embarquée (15) pour ladite prise en compte par l'intermédiaire d'une communication par radio (23).

2. Procédé selon la revendication 1, **caractérisé en ce que** l'entrée d'utilisateur est effectuée par l'intermédiaire d'un clavier (KB) de l'unité embarquée(15).

3. Procédé selon la revendication 1, **caractérisé en ce que** l'entrée d'utilisateur est effectuée à l'aide d'un support de données (TX) dans lequel la position relative (R) est mémorisée et laquelle est lue par l'unité embarquée (15).

4. Procédé selon la revendication 3, **caractérisé en ce que** le support de données (TX) est rapporté sur l'unité embarquée (15) et est lu à partir de l'unité embarquée (15) par l'intermédiaire d'une liaison sans fil, de préférence selon une norme RFID ou NFC.

5. Procédé pour la détection d'une roue (1) en rotation d'un véhicule (2) par l'exploitation du décalage Doppler d'un rayonnement de mesure (6), lequel est émis par une unité de détection (5) passée par le véhicule (2), est réfléchi par la roue (1) et est retrouvé à l'état décalé par décalage Doppler,
dans lequel le véhicule (2) présente une unité embarquée (15), dans une position relative (R) par rapport à la roue (1), qui peut entrer en communication par radio (23) avec un émetteur-récepteur (24) de localisation connue (L) dans l'unité de détection (5), comprenant :

la mesure de la direction ($\delta$) et de l'éloignement (z) de l'unité embarquée (15) par rapport à l'émetteur-récepteur (24) à partir d'au moins une communication par radio (23) entre ceux-ci ; et
la commande de la direction du rayonnement ($\alpha$, $\beta$, $\gamma$) ou de la position de rayonnement (A) du rayonnement de mesure (6) en fonction de la direction ($\delta$) mesurée et de l'éloignement (z) et en tenant compte de ladite position relative (R) et de la localisation (L) ;
**caractérisé en ce que** ladite position relative (R) est mémorisée dans l'unité embarquée (15) lors de sa fabrication et est lue à partir de l'unité embarquée (15) pour ladite prise en compte par l'intermédiaire d'une communication par radio (23).

6. Procédé pour la détection d'une roue (1) en rotation d'un véhicule (2) par l'exploitation du décalage Doppler d'un rayonnement de mesure (6), lequel est émis par une unité de détection (5) passée par le véhicule (2), est réfléchi par la roue (1) et est retrouvé à l'état décalé par décalage Doppler,
dans lequel le véhicule (2) présente une unité embarquée (15), dans une position relative (R) par rapport à la roue (1), qui peut entrer en communication par radio (23) avec un émetteur-récepteur (24) de localisation connue (L) dans l'unité de détection (5), comprenant :

la mesure de la direction ($\delta$) et de l'éloignement (z) de l'unité embarquée (15) par rapport à l'émetteur-récepteur (24) à partir d'au moins une communication par radio (23) entre ceux-ci ; et
la commande de la direction du rayonnement ($\alpha$, $\beta$, $\gamma$) ou de la position de rayonnement (A) du rayonnement de mesure (6) en fonction de la direction ($\delta$) mesurée et de l'éloignement (z) et en tenant compte de ladite position relative (R) et de la localisation (L) ;
**caractérisé en ce que** ladite position relative (R) est mesurée par un dispositif de contrôle (17) stationnaire ou mobile et est mémorisée dans l'unité embarquée (15) sous la forme d'une indication (CLI) d'une catégorie de véhicule (CL) par l'intermédiaire d'une communication par radio (23') et est lue à partir de l'unité embarquée (15) pour ladite prise en compte par l'intermédiaire d'une communication par radio (23).

7. Procédé selon l'une des revendications 1 à 6, **caractérisé en ce que** ladite position relative (R) est mémorisée dans l'unité embarquée (15) sous la forme d'une indication (CLI) d'une catégorie de véhicule (CL) et que, pour ladite prise en compte, l'indication de catégorie de véhicule (CLI) est lue à partir de l'unité embarquée (15) et, à l'aide d'une banque de données (DB) qui fait correspondre les catégories de véhicule (CL) possibles avec des valeurs numériques (b, $h_b$ - $h_r$) de position relatives (R), la convertit en une position relative (R) avec des valeurs numériques (b, $h_b$ - $h_r$).

8. Procédé selon l'une des revendications 1 à 7, **caractérisé en ce que** la mesure de la direction ($\delta$) et de l'éloignement (z) de l'unité embarquée (15) par rapport à l'émetteur-récepteur (24) est effectuée par une triangulation par radio dans le cadre de la communication par radio (23) entre ceux-ci.

9. Procédé selon la revendication 8, **caractérisé en ce que** la triangulation par radio est effectuée au moyen de mesures de phases dans un réseau d'antennes de l'émetteur-récepteur (24) de l'unité de détection (5).

10. Procédé selon l'une des revendications 1 à 9, **caractérisé en ce que** le rayonnement de mesure (6) est un rayonnement radar et la commande de sa direction de rayonnement ($\alpha$, $\beta$, $\gamma$) est effectuée par la commande des phases d'un réseau d'antennes (25) de l'unité de détection (5).

11. Procédé selon l'une des revendications 1 à 10, **caractérisé en ce que** le rayonnement de mesure (6) est un rayonnement radar et la commande de sa position de rayonnement (A) est effectuée par commutation entre plusieurs antennes (25') de l'unité de détection (5).

12. Procédé selon l'une des revendications 1 à 11, **caractérisé en ce qu'**une roue (1) est détectée lorsque l'évolution en fonction du temps du décalage Doppler ($\Delta f$) montre un saut (10), une montée (11), une descente (11) ou une diffusion de fréquence (F), respectivement au dessus d'une valeur de seuil.

13. Procédé selon l'une des revendications 1 à 12, **caractérisé en ce que** l'unité de détection (5) est conçue sous la forme d'un véhicule de contrôle.

14. Procédé selon l'une des revendications 1 à 13, **caractérisé en ce que** la communication par radio (23, 23') est exécutée selon les normes UNI-DSCR, respectivement CEN-DSCR, ITS-G5, IEEE-WAVE ou RFID.

*Fig. 1a*

*Fig. 1b*

*Fig. 1c*

*Fig. 1d*

*Fig. 2a*

*Fig. 2b*

*Fig. 3*

*Fig. 4a*

*Fig. 4b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037233 A1
- EP 2538238 A1
- EP 2538239 A1
- WO 2012175470 A1
- EP 2682778 A1